# EUROPÄISCHE PATENTSCHRIFT

(11) **EP 1 172 579 B1**
(45) Veröffentlichungstag und Bekanntmachung des Hinweises auf die Patenterteilung: **24.08.2005**
(21) Anmeldenummer: 00114773.5
(22) Anmeldetag: 10.07.2000
(51) Int. Cl.: F16F 1/12, E05D 13/00

(54) **Torsionsfeder für den Ausgleich von Gewichtskräften, insbesondere bei Sektionaltoren**
Torsion spring for counterweight, especially for sectional gates
Ressort torsionnel pour contrepoids, en particuler pour des portes à sections

(43) Veröffentlichungstag der Anmeldung: 16.01.2002
(73) Patentinhaber: Schroer, Bernt, Dr., 33442 Herzebrock-Clarholz (DE)
(72) Erfinder: Schroer, Bernt, Dr., 33442 Herzebrock-Clarholz (DE)
(74) Vertreter: Rehberg Hüppe + Partner

(56) Entgegenhaltungen:
- EP-A- 0 965 399
- DE-C- 4 341 309
- FR-A- 2 630 491
- JP-A- 55 047 030

## Beschreibung

Die Erfindung bezieht sich auf eine aus Federstahldraht gewundene oder gewickelte Torsionsfeder für den Ausgleich von Gewichtskräften, insbesondere bei Sektionaltoren, wobei die Torsionsfeder auf einer Welle zu lagern ist und wobei mindestens eines der beiden Federenden der Torsionsfeder einen gegenüber dem Wirkdurchmesser der Torsionsfeder zwischen den Federenden reduzierten Anschlußdurchmesser aufweist.

Torsionsfedern werden zum Ausgleich von Gewichtskräften beispielsweise bei Sektionaltoren verwendet, die im zunehmenden Maße als Garagen- und Industrietore Verwendung finden.

Die Grundform von gewickelten oder gewundenen Torsionsfedern für den Gewichtsausgleich ist zylindrisch. Im einfachsten Fall weist eine Torsionsfeder dabei einen konstanten Durchmesser über ihre gesamte Länge von ihrem einen Federende bis zu ihrem anderen Federende einschließlich der Federenden selbst auf, der dem Wirkdurchmesser der Torsionsfeder entspricht. Die Lagerung der Torsionsfeder auf einer Welle, die durch die Torsionsfeder torsionselastisch abgestützt wird, erfolgt dabei typischerweise über einen ortsfesten Festkonus, der sich nicht mit der Welle dreht, und einen drehfest auf der Welle angeordneten Spannkonus. Das jeweilige Federende ist auf den jeweiligen Konus aufgeschoben und an dem Konus in der Regel durch Festklemmen des Federdrahts gesichert, wobei an dem jeweiligen Federende ein Befestigungselement aus Federdraht angeformt sein kann, das diese Festlegung des Federendes unterstützt. Das Befestigen der Federenden an den Konen ist arbeitsaufwendig. Zudem ist der Kostenaufwand für die Konen selbst erheblich, insbesondere weil bei zylindrischen Torsionsfedern, die auf ihren jeweiligen Anwendungszweck durch Variation unter anderem ihres Wirkdurchmessers angepaßt werden, unterschiedliche, auf den jeweiligen Wirkdurchmesser abgestimmte Konen eingesetzt werden müssen. Darüberhinaus besteht bei zylindrischen Torsionsfedern, die nur an ihren Enden durch Konen gegenüber der Welle geführt sind, das Problem, daß sie sich bei Torsionsbeanspruchung verwerfen. Dieser Verwerfung kann durch ein Stützelement, das in die Torsionsfeder eingeschoben wird, begegnet werden. Dieses Stützelement ist aber erst dann innerhalb der Torsionsfeder gesichert, wenn diese ihrerseits fest eingebaut ist. Vorher kann es hingegen leicht aus der Torsionsfeder herausfallen.

Aus der EP 965 399 A2 ist es bekannt, beim Winden einer spiralförmigen Torsionsfeder die Federenden mit kleinerem Anschlußdurchmesser zu winden als dem Wirkdurchmesser im dazwischen liegenden Hauptbereich der Torsionsfeder, wodurch sich eine Torsionsfeder der eingangs beschriebenen Art ergibt. Dies ermöglicht es, bei Torsionsfedern für unterschiedliche Beanspruchungen, d h. mit unterschiedlichem Wirk- und Drahtdurchmesser, die Federenden jeweils mit gleichem Anschlußdurchmesser zu winden, so daß gleiche Befestigungselemente zur Anwendung kommen können und beispielsweise auch eine einheitliche axiale Länge der Torsionsfedern unabhängig von ihrer Beanspruchung realisierbar ist. Die Abstimmung der Torsionsfedern auf die jeweilige Beanspruchung erfolgt primär über ihren Wirkdurchmesser im zwischen den Federenden liegenden Hauptbereich der Torsionsfedern. Bei solchen Torsionsfedern mit eingezogenen Federenden ist es aber schwierig, den Hauptbereich zwischen den Federenden mit einem Stützelement radial abzustützen. In der EP 965 399 A2 wird hierzu vorgeschlagen, bereits beim Winden der spiralförmigen Torsionsfeder ein Stützelement in Form eines Rohrabschnitts in den Hauptbereich der Torsionsfeder einzubringen. Nach dem Winden des zweiten Federendes ist dieser Stützkörper durch die beiden eingezogenen Federenden in der Torsionsfeder fixiert. Es stellt sich jedoch als aufwendig heraus, den Stützkörper tatsächlich bereits während des Windens in die Torsionsfeder einzubringen. Weiterhin ist nachteilig, daß bei den aus der EP 965 399 A2 bekannten Torsionsfedern zwar unabhängig von ihrem Wirkdurchmesser gleiche Befestigungselemente zur Anwendung kommen können, wodurch zwar die Bevorratung und Lagerhaltung von Befestigungselementen vereinfacht wird, das eigentliche Befestigen der Federenden bleibt aber weiterhin arbeitsaufwendig. Konkret werden für die bekannten Torsionsfedern weiterhin Konen verwendet.

Bei einer Torsionsfeder mit zylindrischem Durchmesser ist es bekannt, ein Federende ohne Verwendung eines Konus festzulegen. Konkret wird ein Festkonus dadurch ersetzt, daß die letzte Windung des Federstahldrahts an dem entsprechenden Federende an mehreren untereinander beabstandeten Punkten an eine Platte festgeklemmt wird, wobei die Platte gleichzeitig zur Lagerung der Welle dient, auf der die Torsionsfeder angeordnet ist und wobei die drei Klemmpunkte auf einem Kreisbogen um die Drehachse der Welle angeordnet sind. Diese bekannte Befestigung ermöglicht zwar den Verzicht auf den Festkonus, wodurch Materialkosten eingespart werden, der Arbeitsaufwand für die Befestigung ist aber bedeutend. Zudem muß nicht nur die eigentliche Befestigung des Federendes arbeitsaufwendig vorgenommen werden. Gleichzeitig muß auch die koaxiale Lage des Federendes gegenüber der innen liegenden Welle eingestellt werden.

Aus der JP-A-55-47030 ist eine Federanordnung mit einer Welle und mit einer auf dieser angeordneten Torsionsfeder der eingangs beschriebenen Art bekannt, bei der die Torsionsfeder an einem der beiden Federenden so weit eingezogen ist, dass sich die Torsionsfeder allseitig in radialer Richtung an die Welle anlegt. Hierdurch soll ihre Federkenninie beeinflusst werden.

Der Erfindung liegt die Aufgabe zugrunde, eine Torsionsfeder der eingangs beschriebenen Art aufzuzeigen, die mit geringem Aufwand sicher auf einer Welle gelagert werden kann, ohne dass sie sich verwirft.

Erfindungsgemäß wird diese Aufgabe durch eine Torsionsfeder mit den Merkmalen des Patentanspruchs 1 gelöst. Vorteilhafte Ausführungsformen der Torsionsfeder sind in den Patentansprüchen 2 bis 6 definiert. Federanordnungen mit der neuen Torsionsfeder sind in den Patentansprüchen 7 und 8 definiert.

Zum Erreichen der Führung der Torsionsfeder auf der Welle ist es ohne Einsatz eines Stützelements oder dergleichen möglich, die Torsionsfeder zwischen den Federenden mindestens einmal von ihrem Wirkdurchmesser auf den Anschlußdurchmesser einzuziehen, wonach sie sich anschließend wieder auf den Wirkdurchmesser erweitert. Dieser zusätzliche Bereich mit dem Anschlußdurchmesser bildet einen weiteren Führungspunkt für die koaxiale Führung der Torsionsfeder zu der Welle aus.

Bei der neuen Torsionsfeder entfällt die Notwendigkeit, das Federende mit dem Anschlußdurchmesser über ein Befestigungselement, beispielsweise einen Konus, gegenüber der Welle koaxial auszurichten. Die koaxiale Ausrichtung ergibt sich zwischen dem Federende und der Welle selbst, indem der Bereich mit dem Anschlußdurchmesser der Torsionsfeder auf der Welle geführt wird. Damit reduziert sich die Aufgabe von Befestigungselementen für die Torsionsfeder auf den drehfesten Anschluß an die Welle bzw. an ein ortsfestes Lager. So müssen von der Befestigung axiale Kräfte, wie sie zwischen einen Konus und einem Federende auftreten, nicht mehr aufgenommen werden. Es kann eine vollständige Konzentration auf die Aufnahme tangentialer Kräfte erfolgen. Wenn gleichzeitig bei unterschiedlichen Einsatzbedingungen immer mit Wellen mit standardisierten Außendurchmessern gearbeitet wird, reicht eine geringe Anzahl von unterschiedlichen Befestigungselemente aus, die unabhängig von dem Wirkdurchmesser der jeweiligen Torsionsfeder zur Anwendung kommen. Im Ergebnis können sehr einfache und damit kostengünstige Befestigungselemente in einer einzigen Ausführungsform eingesetzt werden, wobei die Art der Befestigung zudem Vorteile bezüglich des Arbeitsaufwands für die Befestigung bietet. Dabei ist nicht zu befürchten, daß die Torsionsfeder bei ihrer Arbeitsbeanspruchung in ihrem Anschlußdurchmesser soweit verändert wird, daß sie sich in unerwünschter Weise auf der Welle festsetzt. In den Bereichen des gegenüber dem Wirkdurchmesser reduzierten Anschlußdurchmessers machen sich Durchmesserverringerungen bei der Beanspruchung der Torsionsfeder kaum bemerkbar.

Es versteht sich, daß die neue Torsionsfeder vorzugsweise an beiden Federenden den gegenüber dem Wirkdurchmesser der Torsionsfeder zwischen den Federenden reduzierten Anschlußdurchmesser aufweist. So können die Vorteile der neuen Torsionsfeder im Bereich beider ihrer endseitigen Befestigungen genutzt werden.

Seine Führungsfunktion für die Welle kann jeder Bereich mit dem Anschlußdurchmesser bereits wahrnehmen, wenn er den Anschlußdurchmesser über etwa drei Viertel einer vollen Federwindung aufweist. Bevorzugt ist es jedoch, wenn die Torsionsfeder den Anschlußdurchmesser über jeweils ein bis fünf volle Federwindungen aufweist, um eine eindeutige ringförmig geschlossene Führung zur Welle hin auszubilden.

Insbesondere dort, wo sich funktionsgemäß eine Relativverdrehung zwischen der Torsionsfeder und der Welle ergibt, kann in mindestens einem Bereich mit dem Anschlußdurchmesser eine Gleitbeschichtung oder -hülse an der Innenseite der Torsionsfeder vorgesehen sein, über die sich die Torsionsfeder an der Welle abstützt. Es geht hierbei aber nicht um Überbrückungshülsen, mit denen unterschiedliche Anschlußdurchmesser der Federenden an eine Welle mit festem Außendurchmesser angepaßt werden können. Vielmehr geht es ausschließlich um eine Reibungsverminderung zwischen der Torsionsfeder und der Welle.

Bei der neuen Torsionsfeder kann an mindestens einem der Federenden ein Verankerungselement zur Aufnahme tangentialer Kräfte aus dem Federstahldraht angeformt sein. Es ist möglich, ausschließlich mit diesem Verankerungselement eine Befestigung des jeweiligen Federendes vorzunehmen, da tatsächlich nur tangentiale Kräfte zwischen dem Federende und der Welle bzw. einem Festlager aufgenommen werden müssen.

Beispielsweise kann das Verankerungselement aus dem Federstahldraht ein tangential zu dem Anschlußdurchmesser verlaufender Federschenkel sein. Es ist aber ebenso möglich, einen solchen Federschenkel radial oder axial abstehen zu lassen oder hakenförmig in einer dieser Richtungen umzubiegen.

In einer Federanordnung ist die neue Torsionsfeder so auf der Welle gelagert, daß ihr eines Federende mit der Welle drehfest verbunden ist und ihr anderes Federende mit einem Bauteil drehfest verbunden ist, an dem die Welle drehbar gelagert ist. Mit anderen Worten ist das andere Federende der Torsionsfeder ortsfest.

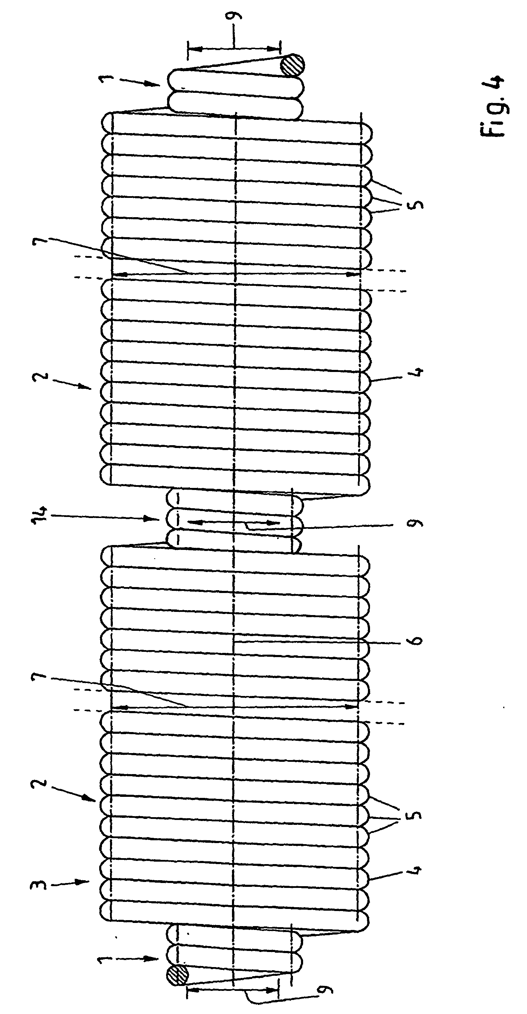

Die Erfindung wird im folgenden anhand eines in Figur 4 dargestellten Ausführungsbeispiels näher erläutert und beschrieben. Die in den weiteren Figuren dargestellten Torsionsfedern und Federanordnungen dienen einer Erläuterung von Details, die auch in Bezug auf die erfindungsgemäße Torsionsfeder Bedeutung haben. Es zeigt
- Figur 1: ein Federende und einen sich anschließenden Teil eines Hauptbereichs einer ersten Ausführungsform der neuen Torsionsfeder in einer Seitenansicht auf die Federachse,
- Figur 2: das Federende gemäß Figur 1 in einer Ansicht in Richtung der Federachse, wobei die Torsionsfeder auf einer Welle angeordnet ist,
- Figur 3: die gesamte Torsionsfeder gemäß Figur 1 in einer Seitenansicht auf die Federachse,
- Figur 4: eine zweite, gegenüber den Figuren 1 bis 3 abgewandelte Ausführungsform der neuen Torsionsfeder,
- Figur 5: das Federende einer dritten abgewandelten Ausführungsform der neuen Torsionsfeder,
- Figur 6: das Federende einer vierten abgewandelten Ausführungsform der neuen Torsionsfeder und
- Figur 7: das Federende einer weiteren abgewandelten Ausführungsform der neuen Torsionsfeder.

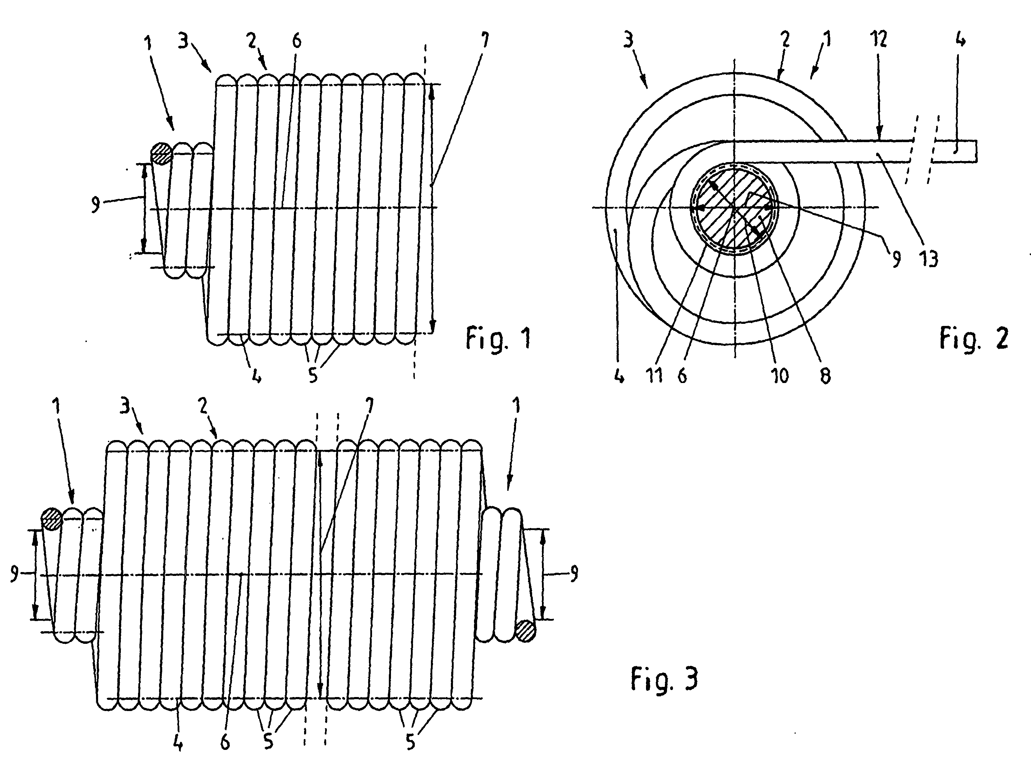

Die in Figur 1 in Form eines Federendes 1 und eines sich daran anschließenden Hauptbereichs 2 dargestellte Torsionsfeder 3 ist aus Federstahldraht 4 gewunden. Sie kann alternativ auch aus Federstahldraht 4 gewickelt sein. Die einzelnen Federwindungen 5 der Torsionsfeder 3 verlaufen spiralförmig um eine Federachse 6. In dem Hauptbereich 2 weist die Torsionsfeder 3 einen Wirkdurchmesser 7 auf, über den die Torsionsfeder 3 neben dem Federstahldraht 4 und ihrer Länge auf ihren jeweiligen Verwendungszweck abgestimmt ist. Bei diesem Verwendungszweck handelt es sich um den Ausgleich von Gewichtskräften, wobei die Torsionsfeder 3 eine in Figur 2 dargestellte Welle 8 torsionselastisch abstützt und wobei die Welle 8 zur direkten oder indirekten Aufwicklung von Halteseilen oder dgl. beispielsweise für ein Sektionaltor dient, so daß beim Abziehen der Halteseile von der Welle 8, d. h. zunehmenden Gewichtskräften, die Torsionsfeder 3 auf Torsion beansprucht wird und Gegenkräfte zu der zunehmenden abzustützenden Gewichtskraft aufbaut. Zur Führung der Torsionsfeder 3 ist diese im Bereich des dargestellten Federendes 1 für einige wenige Federwindungen 5 auf einen Anschlußdurchmesser 9 eingezogen, der auf einen Außendurchmesser 10 der Welle 8 so abgestimmt ist, daß sich das Federende 1 in radialer Richtung zur Federachse 6 an der Welle 8 so abstützt, daß eine koaxiale Führung der Torsionsfeder 3 auf der Welle 8 gegeben ist. Dabei kann in einem Freiraum zwischen der Welle 8 und dem Bereich der Torsionsfeder 3 mit dem Anschlußdurchmesser 9 eine Gleithülse 11 oder ein anderes Gleitmittel zur Reduktion der Reibung zwischen der Welle 8 und der Torsionsfeder 3 angeordnet sein. Ein hier nicht dargestelltes Befestigungselement zu drehfesten Lagerung des Federendes 1 gegenüber der Welle 8 oder gegenüber einem ortsfesten Drehlager für die Welle 8 muß damit nur noch die Aufgabe erfüllen, tangentiale Kräfte zwischen der Welle 8 und der Torsionsfeder 3 aufzunehmen, hierzu ist bei der Torsionsfeder gemäß den Figuren 1 und 2 ein Verankerungselement 12 aus dem Federstahldraht 4 an dem Federende 1 angeformt, bei dem es sich um einen tangential zu dem Anschlußdurchmesser 6 verlaufenden Federschenkel 13 handelt. Dieser Federschenkel kann auf einfache Weise beispielsweise an einer ortsfesten Gehäusewandung fixiert werden.

Während Figur 1 offen läßt, wie das jeweils zweite Federende der Torsionsfeder 3 ausgebildet ist, wird aus Figur 3 deutlich, daß beide Federenden 1 den reduzierten Anschlußdurchmesser 9 aufweisen, der auf den Außendurchmesser der hier wieder nicht dargestellten Welle 8 abgestimmt ist. Es ist aber auch denkbar, für die ortsfeste Lagerung eines Federendes einen anderen Anschlußdurchmesser 9 zu wählen, der beispielsweise auf einen Lagerring um ein Drehlager für die Welle abgestimmt ist. Dies ist jedoch nicht erforderlich, da auch bei einer Torsionsbeanspruchung der Torsionsfeder 3 nicht die Gefahr besteht, daß sich ihr Anschlußdurchmesser 9 soweit verringert, daß sich ein ortsfestes Federende auf der drehenden Welle festsetzt. Im Bereich des gegenüber dem Wirkdurchmesser 7 reduzierten Anschlußdurchmessers 9 sind Durchmesserverringerungen bei einer Torsionsbeanspruchung der Torsionsfeder 3 nur in einem so stark reduziertem Maße zu beobachten, daß sie bezüglich der Führung der Torsionsfeder 3 gegenüber der Welle 8 unbeachtlich sind.

Aus diesem Grund ist es auch möglich, den Durchmesser der Torsionsfeder 3 innerhalb ihres Hauptbereichs 2 von dem Wirkdurchmesser 7 auf den Anschlußdurchmesser 9 einzuziehen und anschließend wieder auf den Wirkdurchmesser 7 zu erweitern, um Abstützbereiche 14 auszubilden, über die sich die Torsionsfeder 3 an einem oder mehren über ihre Länge verteilten Punkte an der hier nicht dargestellten Welle 8 abstützt. Hierdurch wird eine koaxiale Anordnung zu der Welle auch im Mittelbereich der Torsionsfeder 3 ohne Verwendung zusätzlicher Stützkörper sichergestellt.

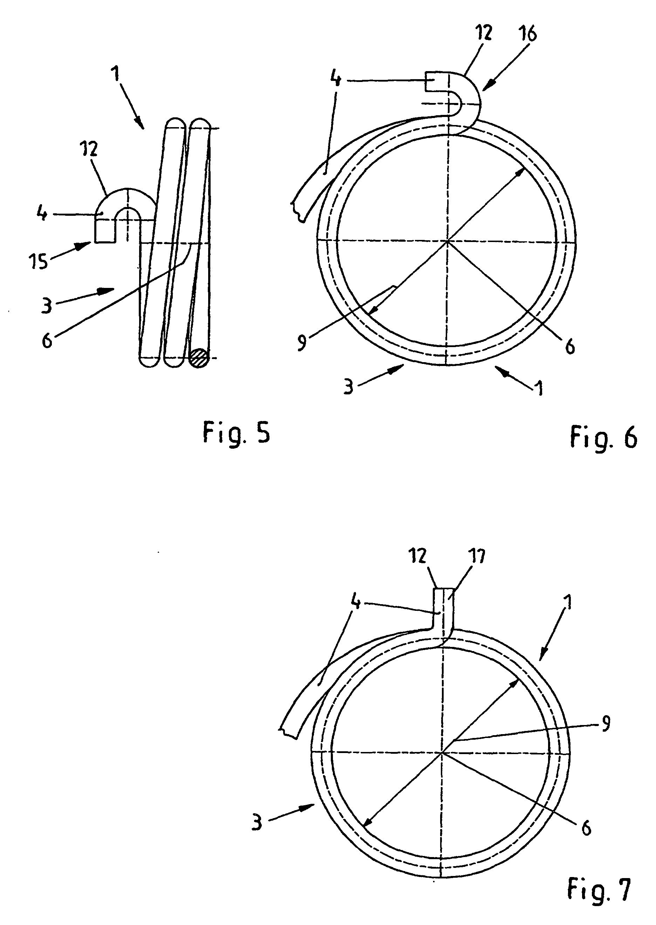

Figur 5 zeigt das Federende 1 einer Ausführungsform der Torsionsfeder 3, bei der als Verankerungselement 12 ein Haken 15 aus dem Federstahldraht 4 angeformt ist, der sich im wesentlichen parallel zu der Federachse 6 erstreckt. Gemäß Figur 6 ist ein Haken 16 als Verankerungselement 12 angeformt, der sich im wesentlichen radial zu der Federachse 6 erstreckt. Gemäß Figur 7 handelt es sich um einen radial abstehenden Federschenkel 17 als Verankerungselement 12.

### BEZUGSZEICHENLISTE

- 1 -: Federende
- 2 -: Hauptbereich
- 3 -: Torsionsfeder
- 4 -: Federstahldraht
- 5 -: Federwindung
- 6 -: Federachse
- 7 -: Wirkdurchmesser
- 8 -: Welle
- 9 -: Anschlußdurchmesser
- 10 -: Außendurchmesser

- 11 -: Gleithülse
- 12 -: Verankerungselement
- 13 -: Federschenkel
- 14 -: Abstützbereich
- 15 -: Haken
- 16 -: Haken
- 17 -: Federschenkel

## Patentansprüche

1. Aus Federstahldraht (4) gewundene oder gewickelte Torsionsfeder (3) für den Ausgleich von Gewichtskräften, insbesondere bei Sektionaltoren, wobei die Torsionsfeder (3) auf einer Welle (8) zu lagern ist und wobei mindestens eines der beiden Federenden (1) der Torsionsfeder (3) einen gegenüber dem Wirkdurchmesser (7) der Torsionsfeder (3) zwischen den Federenden (1) reduzierten Anschlussdurchmesser (9) aufweist, **dadurch gekennzeichnet, dass** die Torsionsfeder (3) zwischen den Federenden (1) mindestens einmal von ihrem Wirkdurchmesser (7) auf den Anschlussdurchmesser (9) eingezogen ist und sich wieder auf den Wirkdurchmesser (7) erweitert.

2. Torsionsfeder nach Anspruch 1, **dadurch gekennzeichnet, dass** beide Federenden (1) der Torsionsfeder (3) den gegenüber dem Wirkdurchmesser (7) der Torsionsfeder (3) zwischen den Federenden reduzierten Anschlussdurchmesser (9) aufweisen.

3. Torsionsfeder nach einem der Ansprüche 1 oder 2, **dadurch gekennzeichnet, dass** die Torsionsfeder (3) den Anschlussdurchmesser (9) über jeweils 1 bis 5 volle Federwindungen (5) aufweist.

4. Torsionsfeder nach einem der Ansprüche 1 bis 3, **dadurch gekennzeichnet, dass** in mindestens einem Bereich mit dem Anschlussdurchmesser (9) eine Gleitbeschichtung oder -hülse (11) an der Innenseite der Torsionsfeder (3) vorgesehen ist, über die sich die Torsionsfeder (3) an der Welle (8) abstützen kann.

5. Torsionsfeder nach einem der Ansprüche 1 bis 4, **dadurch gekennzeichnet, dass** an mindestens einem der Federenden (1) ein Verankerungselement (12) zur Aufnahme tangentialer Kräfte aus dem Federstahldraht (4) angeformt ist.

6. Torsionsfeder nach Anspruch 5, **dadurch gekennzeichnet, dass** das Verankerungselement (12) ein tangential zu dem Anschlussdurchmesser (9) verlaufender Federschenkel (13) ist.

7. Federanordnung mit einer Torsionsfeder nach einem der Ansprüche 1 bis 6, wobei die Torsionsfeder (3) auf der Welle (8) gelagert ist, wobei das eine Federende (1) der Torsionsfeder (3) mit der Welle (8) drehfest verbunden ist und wobei das andere Federende (1) der Torsionsfeder (3) mit einem Bauteil drehfest verbunden ist, an dem die Welle (8) drehbar gelagert ist.

8. Federanordnung nach Anspruch 7, **dadurch gekennzeichnet, dass** der Anschlussdurchmesser (9) der Torsionsfeder (3) so auf den Aussendurchmesser (10) der Welle (8) abgestimmt ist, dass die Torsionsfeder (3) in radialer Richtung durch ihren Bereich mit dem Anschlussdurchmessers (9) auf der Welle (8) geführt wird.

## Claims

1. Torsion spring (3) coiled or wound from spring steel wire (4) for counterbalancing weights, particularly in sectional doors, the torsion spring (3) being to be mounted on a shaft (8), and at least one of the spring ends (1) of the torsion spring (3) having a connection diameter (9) which is reduced as compared to the operational diameter (7) of the torsion spring (3) between the spring ends (1), **characterised in that** the torsion spring (3) is reduced from its operational diameter (7) down to connection diameter (9) and expanded again up to its operational diameter (7) at least once between the spring ends (1).

2. Torsion spring according to claim 1, **characterised in that** both spring ends (1) of the torsion spring (3) have the connection diameter (9) which is reduced with regard to the operational diameter (7) of the torsion spring (3) between the spring ends.

3. Torsion spring according to claim 1 or 2, **characterised in that** the torsion spring (3) each time has the connection diameter over 1 to 5 full spring windings (5).

4. Torsion spring according to any of the claims 1 to 3, **characterised in that** a guiding coating or a gliding sleeve (11) is arranged at the inside of the torsion spring (3) within at least one portion having the reduced connection diameter, over which the torsion spring (3) may lean o the shaft (8).

5. Torsion spring according to any of the claims 1 to 4, **characterised in that** an anchor element (12) is formed of the spring steel wire (4) at at least one of the spring ends (1) for supporting tangential forces.

6. Torsion spring according to claim 5, **characterised in that** the anchor element (12) is a spring arm (13) running tangentially with regard to the connection diameter (9).

7. Spring arrangement having a torsion spring according to any of the claims 1 to 6, the torsion spring (3) being mounted on a shaft (8), one of the spring ends (1) of the torsion spring (3) being fixed to the shaft (8), and the other spring end (1) of the torsion spring (3) being fixed to an element to which the shaft (8) is rotationally mounted to.

8. Spring arrangement according to claim 7, **characterised in that** the connection diameter (9) of the torsion spring (3) is tuned to the outer diameter (10) of the shaft (8) in such a way that the torsion spring (3) is guided on the shaft (8) in radial directions by its portion having the connection diameter (9).

## Revendications

1. Ressort de torsion (3) en fil d'acier à ressort (4) torsadé ou bobiné pour compenser des forces de poids, en particulier dans les portes à sections, le ressort de torsion (3) devant être supporté par un arbre (8) et au moins l'une des deux extrémités (1) du ressort de torsion (3) présentant un diamètre de raccordement (9) réduit par rapport au diamètre actif (7) du ressort de torsion (3) entre les extrémités (1), **caractérisé en ce que** le ressort de torsion (3) entre ses extrémités (1) est rétréci au moins une fois de son diamètre actif (7) au diamètre de raccordement (9) et s'élargit à nouveau au diamètre actif (7).

2. Ressort de torsion selon la revendication 1, **caractérisé en ce que** les deux extrémités (1) du ressort de torsion (3) présentent le diamètre de raccordement (9) réduit par rapport au diamètre actif (7) du ressort de torsion (3) entre ses extrémités.

3. Ressort de torsion selon l'une des revendications 1 ou 2, **caractérisé en ce que** le ressort de torsion (3) présente le diamètre de raccordement (9) toutes les une à cinq spires (5) complètes du ressort.

4. Ressort de torsion selon l'une des revendications 1 à 3, **caractérisé en ce que** dans au moins une zone présentant le diamètre de raccordement (9) il est prévu un revêtement ou manchon (11) de glissement sur la face intérieure du ressort de torsion (3), sur lequel le ressort de torsion (3) peut prendre appui sur l'arbre (8).

5. Ressort de torsion selon l'une des revendications 1 à 4, **caractérisé en ce que** sur au moins l'une des extrémités (1) du ressort est formé un élément d'ancrage (12) pour absorber les forces tangentielles provenant du fil d'acier à ressort (4).

6. Ressort de torsion selon la revendication 5, **caractérisé en ce que** l'élément d'ancrage (12) est une branche de ressort (13) s'étendant tangentiellement au diamètre de raccordement (9).

7. Dispositif à ressort comportant un ressort de torsion selon l'une des revendications 1 à 6, le ressort de torsion (3) étant supporté par l'arbre (8), une extrémité (1) du ressort de torsion (3) étant reliée solidairement en rotation à l'arbre (8) et l'autre extrémité (1) du ressort de torsion (3) étant reliée solidairement en rotation à un composant sur lequel l'arbre (8) est monté tournant.

8. Dispositif à ressort selon la revendication 7, **caractérisé en ce que** le diamètre de raccordement (9) du ressort de torsion (3) est adapté au diamètre extérieur (10) de l'arbre (8) de manière que le ressort de torsion (3) soit guidé sur l'arbre (8), dans la direction radiale, par sa zone présentant le diamètre de raccordement (9).
